# EUROPÄISCHE PATENTSCHRIFT

(11) **EP 0 561 856 B1**
(45) Veröffentlichungstag und Bekanntmachung des Hinweises auf die Patenterteilung: **20.07.1994**
(21) Anmeldenummer: 92900155.0
(22) Anmeldetag: 10.12.1991
(51) Int. Cl.: A47F 9/04, G01G 21/22

(54) **WIEGEEINRICHTUNG FÜR DIE WARENERFASSUNG IN KAUFHÄUSERN**
DEVICE FOR WEIGHING GOODS IN DEPARTMENT STORES
DISPOSITIF A PESER DES MARCHANDISES DANS DES GRANDS MAGASINS

(30) Priorität: 10.12.1990 DE 4039377
(43) Veröffentlichungstag der Anmeldung: 29.09.1993
(73) Patentinhaber: Siemens Nixdorf Informationssysteme Aktiengesellschaft, 33102 Paderborn (DE)
(72) Erfinder: BAITZ, Günter, D-1000 Berlin 27 (DE); IHLENBURG, Rainer, D-1000 Berlin 30 (DE)
(74) Vertreter: Fuchs, Franz-Josef, Dr.-Ing.
(86) Internationale Anmeldenummer: EP9102368
(87) Internationale Veröffentlichungsnummer: WO9210122

(56) Entgegenhaltungen:
- EP-A- 0 178 223
- EP-A- 0 327 514
- EP-A- 0 401 950
- DE-A- 2 214 763
- DE-A- 3 107 761

## Beschreibung

Die Erfindung betrifft eine Wiegeeinrichtung für die Warenerfassung in Kaufhäusern, bei der jeder gekaufte Artikel identifiziert, anschließend zur Gewichtserfassung in einer Waagenaufnahme gewogen und dann gegebenenfalls von einem Tragbehälter aufgenommen wird.

Es ist bereits bekannt, (EP 0 301 451 A2), in Kaufhäusern gekaufte Waren an Selbstbedienungs-Warenerfassungsplätzen zu erfassen und automatische Abrechnungen zu erstellen. Der Kunde bringt hierzu die von ihm gekauften Waren meist in einem Einkaufswagen zu einem Warenerfassungsplatz und führt sie durch einen Abtastvorgang, mit dem an den Waren angebrachte strichcodierte Etiketten abgetastet werden. Danach werden die Waren in eine Ablage gelegt, die auch ein weiterer Einkaufswagen sein kann und mit einer Waage gekoppelt ist. Beim Identifizieren der Waren durch Abtasten ihrer Etiketten werden der Warenpreis und das Warengewicht ermittelt. Der Warenpreis wird an ein Kassensystem gemeldet, die Gewichtsinformationen werden einer Vergleichseinrichtung zugeführt. Wenn die Waren dann anschließend gewogen werden, kann ihr Gewicht mit den bei der Identifizierung gewonnenen Gewichtsinformationen verglichen werden. Stimmen die Vergleichsgrößen überein, so kann eine Fehlauswertung bzw. ein Betrugsversuch ausgeschlossen werden.

Bei dieser Selbstbedienungs-Warenerfassung können Ungenauigkeiten und Verzögerungen eintreten. Die Waagen haben normalerweise eine Wiegegenauigkeit von wenigen Gramm. Durch äußere Einflüsse verschiedener Art, z.B. zufälliges Anstoßen, Zugluft usw., wird beim Wägevorgang oft die Zeit bis zum Stillstand der Waage erheblich verlängert. Außerdem ist das Ablegen der Waren in einer zur Warenerfassungseinrichtung gehörenden Ablage nach dem Wiegen mit einem Zeitverlust verbunden, da die Waren erst anschließend verpackt werden können.

Es ist auch bereits bekannt, anstelle einer Ablage gleich neben der Warenerfassungseinrichtung Tragtaschen zur Verfügung zu stellen. Diese müssen jedoch vom Kunden einem besonderen Vorratsfach entnommen und auf die Waage gestellt werden. Die erfaßten Waren können dann direkt in eine solche Tragtasche eingefüllt werden. Dabei muß die Tragtasche jedoch zuvor entfaltet und aufgerichtet werden, wodurch der Zeitaufwand insbesondere bei Verwendung mehrerer Tragtaschen erheblich verlängert wird.

Es ist Aufgabe der Erfindung, eine Wiegeeinrichtung für die Warenerfassung anzugeben, die unempfindlich gegenüber äußeren Einflüssen ist und Verzögerungen vorstehend beschriebener Art nach dem Wiegen vermeidet, so daß der Kunde den Bereich der Warenerfassung unmittelbar nach dem Wiegen verlassen kann.

Diese Aufgabe löst die Erfindung mit den Merkmalen des Patentanspruchs 1. Vorteilhafte Weiterbildungen sind Gegenstand der Unteransprüche.

Da bei einer Wiegeeinrichtung nach der Erfindung ein Standbehälter vorgesehen ist, in dem eine Bodenwaage angeordnet ist, wird letztere gegen äußere Einflüsse wie z.B. zufällige Berührungen oder Zugluft wirksam geschützt. Der Standbehälter kann so ausgeführt werden, daß er praktisch alle im Zusammenhang mit dem Wiegen bewegten Teile gegenüber der Umgebung abschirmt. Dadurch wird ein Verlängern des Wiegevorgangs infolge äußerer Einflüsse verhindert. Da die Bogenwaage ferner mit einer Aufhängevorrichtung für einen oder mehrere Tragbehälter versehen ist, die sich also wie die Bodenwaage selbst in dem Standbehälter befinden, können die zu wiegenden Waren leicht in den Standbehälter hineingebracht und nach dem Wiegen innerhalb des Standbehälters in den Tragbehälter umgepackt werden. Dieser wird dann einfach aus dem Standbehälter entnommen, und der Kunde kann sich sofort von der Wiegeeinrichtung entfernen.

Ausführungsbeispiele der Erfindung sowie ihrer Bestandteile werden im folgenden anhand der Zeichnung näher erläutert. Darin zeigen:
- Fig. 1: eine perspektivische Darstellung einer Wiegeeinrichtung als erstes Ausführungsbeispiel,
- Fig. 2: eine perspektivische Darstellung einer Wiegeeinrichtung als zweites Ausführungsbeispiel,
- Fig. 3: eine perspektivische Darstellung eines Tragbehälters,
- Fig. 4: eine Schnittdarstellung mehrerer zusammenhängender Tragbehälter,
- Fig. 5: eine perspektivische Darstellung einer Bodenwaage,
- Fig. 6: eine perspektivische Darstellung einer weiteren Bodenwaage mit einem Einkaufswagen als Waagenaufnahme, und
- Fig. 7: eine perspektivische Darstellung einer weiteren Bodenwaage.

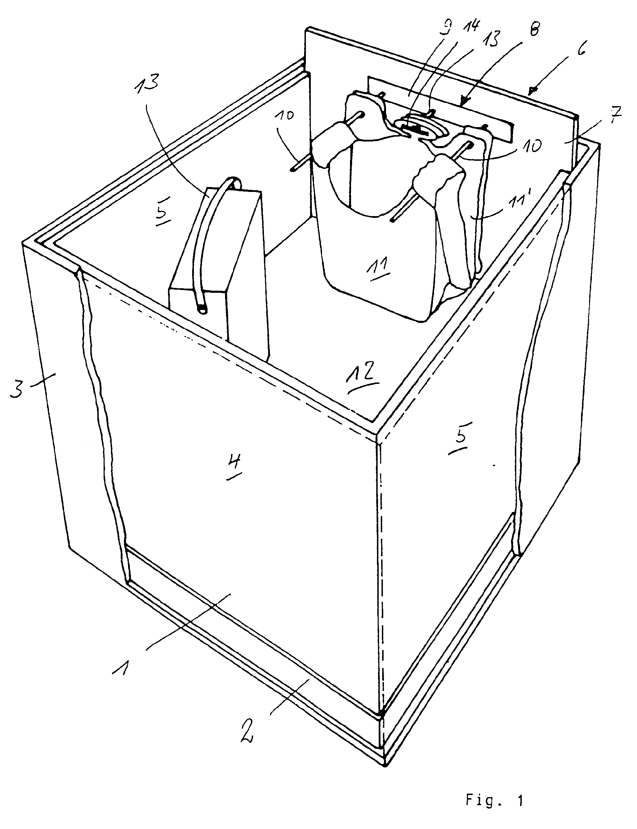

Fig. 1 zeigt einen oben offenen Behälter 1 als Waagenaufnahme, die auf einer Bodenwaage 2 befestigt ist. Die Anordnung 1, 2 ist von einer Box 3 als Standbehälter derart umgeben, daß die Wände 4, 5, 6 des Behälters 1 gerade keine Berührung mit der Box haben, so daß die Waage freies Spiel für den Wiegevorgang hat. Die Seitenwände der Box 3 sind um ein geringes Maß höher als die Seitenwände 4, 5 des Behälters 1, so daß ein Kunde das freie Spiel der Behälter-Waage-Kombination 1, 2 nicht behindert, wenn er sich auf der Oberkante der Box 3 abstützt.

Die Hinterwand 6 des Behälters 1 ist höher als die Box 3. An dem die Box 3 überragenden Teil 7 der Hinterwand 6 ist ein Tragtaschenhalter 8 befestigt. Dieser besteht im wesentlichen aus einer Basisplatte 9, von der zwei Holme 10 senkrecht abstehen, so daß sie waagerecht in den lichten Innenraum des Behälters 1 hineinragen. An den Holmen 10 ist ein Paket von Tragtaschen 11 derart aufgehängt, daß die vorderste stets geöffnet ist. Tragtaschen 11 und -Halter 8 werden weiter unten näher beschrieben.

Der Wiegevorgang läuft nun wie folgt ab: Der Kunde entnimmt seine Waren in beliebiger Reihenfolge seinem Einkaufswagen und führt sie zwecks Erfassung über einen an sich bekannten und deshalb nicht dargestellten Abtaster, der beispielsweise rechts neben der Box 3 angeordnet sein könnte. Die erfaßten Waren deponiert er dann je nach Größe in der Tragtasche 11 oder auf dem Boden 12 des Behälters 1, wie das für ein Großgebinde 13 gezeigt ist. Ist die bereitgehaltene Tragtasche 11 gefüllt, wird sie von den Holmen 10 abgezogen und ebenfalls auf dem Behälterboden 12 abgestellt. Dabei öffnet sich automatisch die nächste Tragtasche 11′. Nach Ende des Warenerfassungsvorganges entnimmt der Kunde dem Behälter 1 die gekaufte Ware.

Dies erfolgt sehr zügig, da der Behälter in der Box geschützt vor Zugwind und zufälliger Berührung angeordnet ist, so daß die Waage 2 nach dem Deponieren eines Artikels im Behälter 1 sehr schnell zum Stillstand kommt. Hinzu kommt, daß der gesamte Einkauf auf einem einzigen Beleg erfaßt wird, wodurch Zuordnungsprobleme zwischen Waren und Belegen nicht auftreten. Schließlich treten auch durch die quasi automatische Bereitstellung aufnahmebereiter Tragtaschen keine nennenswerten Verzögerungen beim Einpacken der Waren auf.

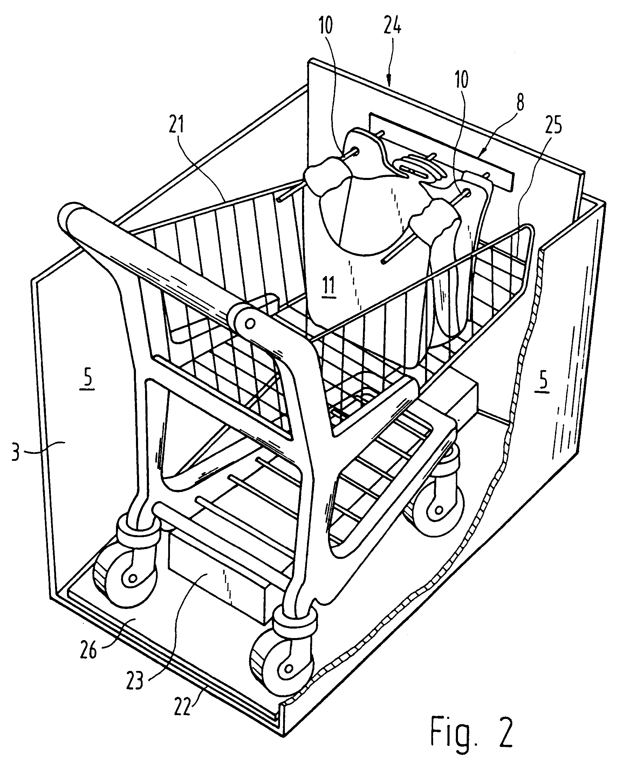

In Fig. 2 ist ein zweites Ausführungsbeispiel der Wiegeeinrichtung dargestellt. Gleiche Teile tragen gleiche Bezugszeichen. Es ist wiederum eine Box 3 vorgesehen. Als Waagenaufnahme ist in die Box 3 ein Einkaufswagen 21 einschiebbar. Zu diesem Zweck fehlt die Vorderwand der Box 3. Sie könnte auch als Tür ausgeführt sein. Auf dem Boden 22 der Box 3 ist eine Waage 23 angeordnet, die das Gewicht des Einkaufswagens 21 und der in ihm befindlichen, bereits abgetasteten Waren erfaßt. Sie wird von einer haubenförmigen Tragplatte 26, die im wesentlichen den gesamten Boden 22 der Box 3 einnimmt, überdeckt. Diese Anordnung der Waage 23 ist aus gewichtsmeßtechnischen Gründen günstig. Der Einkaufswagen 21 wird mit seinen Rädern beiderseits der Waage 23 auf die Tragplatte 26 aufgeschoben.

Mit dem Wiegeteil der Waage 23 ist eine Rückwand 24 verbunden. An dieser ist der oben beschriebene Tragtaschenhalter 8 derart angebracht, daß sich zumindest die geöffnete Tragtasche 11 über dem Aufnahmeraum des Einkaufswagens 21 befindet. Um beim Einschieben des Einkaufswagens 21 in die Box 3 ein Hineingleiten der Tragtaschen 11 in den Aufnahmeraum zu ermöglichen, ist die Vorderwand 25 des Einkaufwagens 21 sehr niedrig ausgeführt. Es ist aber auch vorstellbar, daß eine höhere Vorderwand während des Einschiebvorganges etwa durch in der Box 3 befindliche Mitnehmer nach unten verschwenkt und beim Hinausfahren des Wagens 21 aus der Box 3 wieder hochgeschwenkt wird.

Anhand der Fig. 1, 3 und 4 werden nachfolgend Tragtaschenhalter 8 und Tragtaschen 11 beschrieben. Tragtaschen mit Grifföffnungen zum bündelweisen Aufhängen auf einer Stange sind aus dem DE-GM 73 41 794 bekannt. Diese Taschen haben die Seitenwände nach oben verlängernde Griffe mit Grifföffnungen. Letztere dienen zugleich der Aufhängung der Taschen an einer Stange. Es ist jeweils der zum freien Stangenende weisende Griff nach unten geklappt. Wird die vorderste Tasche an diesem Griff ergriffen und von der Stange abgezogen, so öffnet sich die Tasche. Zwar werden bei dieser Anordnung die aneinander haftenden Seitenwände voneinander getrennt. Zum Befüllen muß die Tasche aber mit den Händen gehalten werden, weil sie sonst in sich zusammensinkt. Die bekannte Anordnung eignet sich also nicht zur Verwendung bei der Selbstbedienungs-Warenerfassung. Selbst wenn die bekannte Tasche mit einem Griff an der Stange hängen bliebe, so daß der Kunde die Hände frei behielte, würde sich die Einfüllöffnung durch das Gewicht der bereits in der Tasche befindlichen Waren wieder schließen. Außerdem kann der eine Traggriff leicht ausreißen.

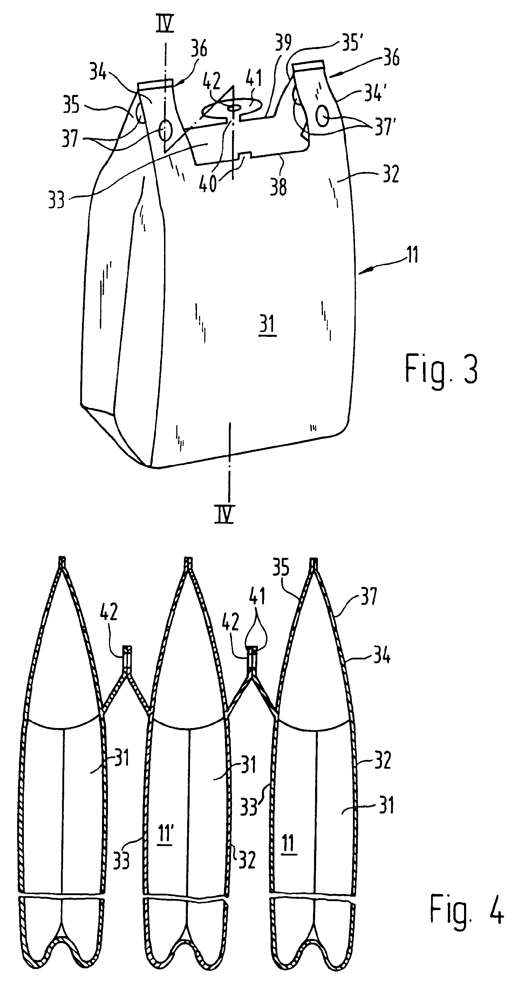

In Fig. 3 und 4 sind die Tragtaschen 11 leicht aufgebläht dargestellt, um ihre Gestalt besser erkennbar zu machen. Oberhalb des Beutels 31 sind an Vorder- und Rückwand 32, 33 Laschen 34, 35 bzw. 34′, 35′ angeformt, die an ihrer Oberkante jeweils miteinander verschweißt sind und so Traggriffe 36 bilden. Die Laschen 34, 35 bzw. 34′, 35′ aller Taschen haben miteinander fluchtende Löcher 37 bzw. 37′.

In der Mitte zwischen den Traggriffen 36 ist an den Oberkanten 38, 39 der Vorder- und Rückwand 32, 33 über einen schmalen Steg 40 je eine Verbindungslasche 41 angeformt. Fig. 4 zeigt, daß die an der Rückwand 33 befindliche Verbindungslasche einer Tasche 11 jeweils mit der Verbindungslasche an der Vorderwand 32 der Nachbartasche 11′ verschweißt ist. Die Verbindungslaschen aller Taschen haben miteinander fluchtende Löcher 42.

Wie anhand der Fig. 1 bereits beschrieben, hat der Tragtaschenhalter 8 zwei parallel zueinander stehende Holme 10. Zwischen diesen steht ein Zapfen 13. Am vorderen Ende des Zapfens 13 ist ein Riegel 14 zwischen einer zu dem Zapfen 13 parallelen und einer um 90° verdrehten Stellung drehbar angeordnet. In letzterer Stellung bildet er mit dem Zapfen 13 ein "T", wie in Fig. 1 gezeigt. Die Holme 10 und der Zapfen 13 sind entsprechend den Löchern 37, 37′, 42 der Tragtaschen 11 angeordnet.

Zum Laden des Tragtaschenhalters 8 mit einem Tragtaschenpaket wird der Riegel 14 in seine zum Zapfen 13 parallele Stellung gebracht. Nun wird das Tragtaschenpaket mit seinen Löchern auf die Holme 10 und den Zapfen 13 aufgesteckt und der Riegel 14 in seine Verriegelungsstellung verdreht. Die erste Tragtasche 11 des Pakets wird geöffnet, indem ihre Vorderwand 32 in Richtung auf das freie Ende der Holme 10 gezogen wird. Der Beutel 31 öffnet sich dabei und bleibt in seiner geöffneten Stellung, weil die Laschen 34, 35 bzw. 34′, 35′ sich voneinander entfernen und zueinander beabstandet auf den Holmen 10 ruhen. Nach dem Füllen wird die Tragtasche 11 von den Holmen 10 gezogen. Dabei reißt zunächst das Loch 42 aus, so daß der Riegel 14 das Wegnehmen der Tasche 11 nicht behindert. Die Stege 40 verbinden aber noch die Vorderwand 32 der nächsten Tragtasche 11′ mit der Hinterwand der abgezogenen Tragtasche 11, so daß mit weiterem Entfernen die nächste Tragtasche 11′ geöffnet wird. Erst danach reißt der Steg 40, und die Tragtasche 11 kann vollends entfernt werden. Auf diese Weise steht dem Kunden immer eine geöffnete Tragtasche zur Verfügung, ohne daß irgendwelche anderen Manipulationen nötig sind.

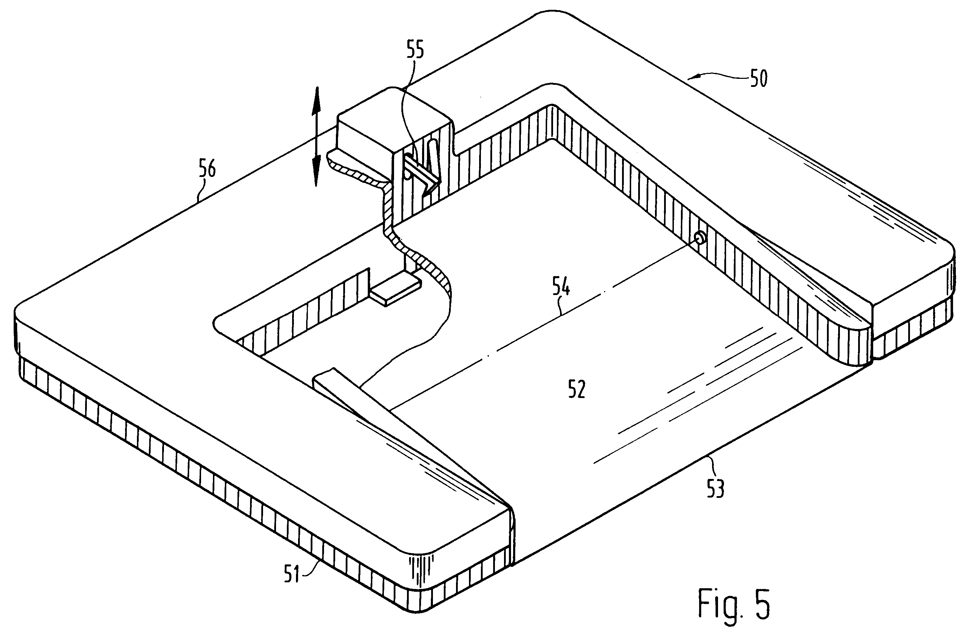

Für eine Waage, die für den Einsatz in einer Anordnung nach Fig. 2 geeignet ist, sind mehrere Ausführungsformen denkbar. Fig. 5 zeigt eine Waage 50, in der die Gewichtsmeßeinrichtungen in einem U-förmigen Gehäuse 56 angeordnet sind. Der Waagenfuß 51 ruht auf dem Fußboden bzw. dem Boden des Standbehälters. Den Zwischenraum zwischen den U-Schenkeln nimmt eine Tragplatte 52 für den Einkaufswagen ein. Diese ist um eine parallel zu ihrer Vorderkante 53, die zugleich als Auffahrrampe für den Einkaufswagen dient, liegende Linie 54 schwenkbar.

Zum Wiegen wird der Einkaufswagen von der offenen U-Seite her auf die Tragplatte 52 geschoben. Die seitlichen U-Schenkel dienen dabei der Führung des Wagens in die richtige Position. Ist der Wagen ganz auf die Tragplatte 52 geschoben, kippt letztere aufgrund der Schwerpunktslage des Wagens so um die Achse 54, daß sie vom Boden freikommt. Dadurch ist ein unbehindertes Wiegen möglich. Der Wagen wird in der Wiegeposition von einem sein Fahrgestell hintergreifenden Rasthaken 55 festgehalten, der erst nach abgeschlossener Erfassung vorzugsweise durch einen Elektromagneten entriegelt wird, welcher durch das Ende des Erfassungsvorgangs am Abtaster gesteuert werden kann.

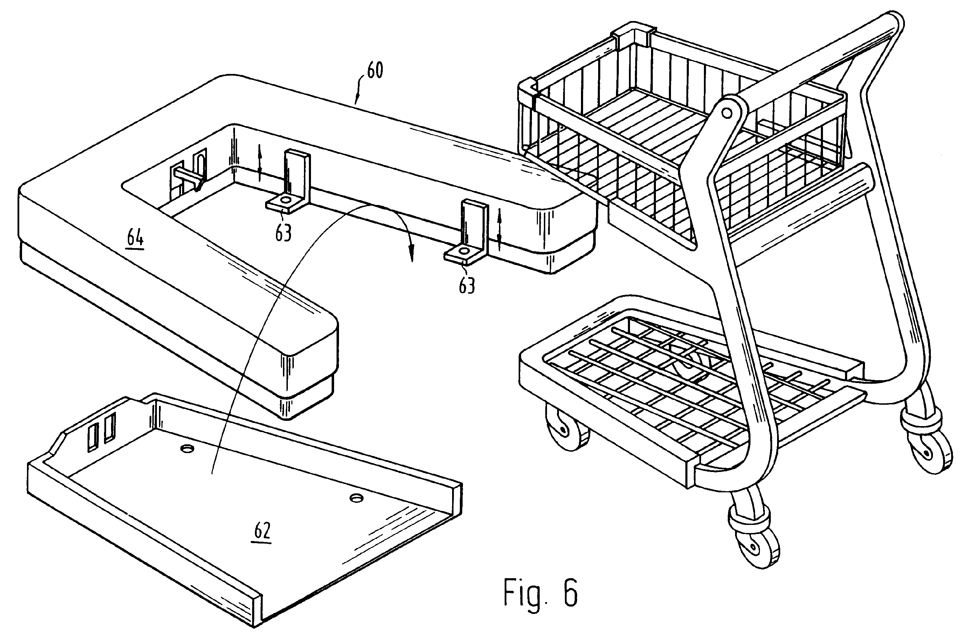

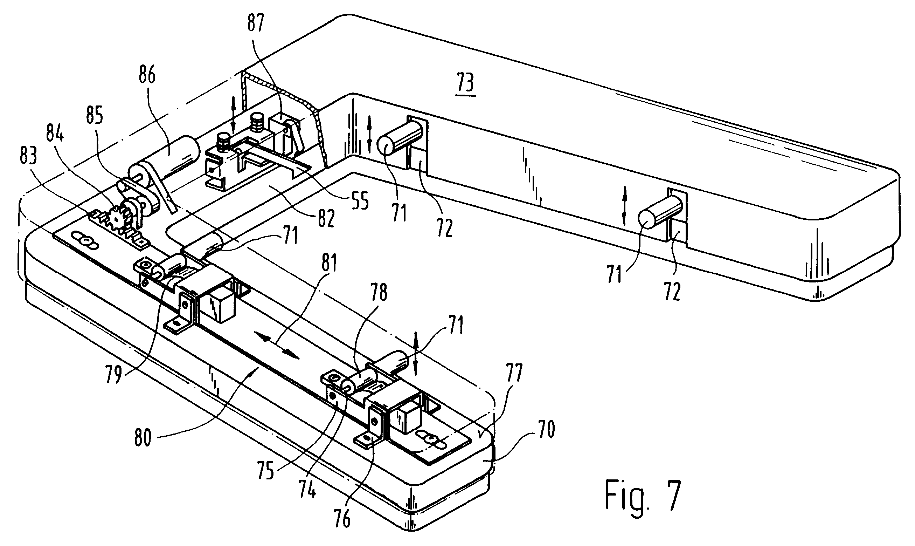

Fig. 6 zeigt eine ähnliche Anordnung wie Fig. 5, die Tragplatte 62 der Bodenwaage 60 ist aber über Befestigungswinkel 63 mit dem Oberteil 64 fest verbunden. Zum leichten Einfahren ruht die Tragplatte 62 auf dem Fußboden bzw. dem Boden des Standbehälters. Zum Wiegen wird das Waagenoberteil 64 mitsamt der Tragplatte 62 motorisch angehoben, so daß sie vom Boden freikommt. Der Hebemechanismus wird anhand der Fig. 7 noch ausführlich beschrieben.

Fig. 7 zeigt in teilweise geschnittener Darstellung ein weiteres Ausführungsbeispiel einer Waage. Statt einer Tragplatte sind an dem Oberteil 70 der Waage höhenverstellbare Zapfen 71 angebracht, die das Fahrgestell des Einkaufswagens untergreifen und es vor dem Wiegen vom Boden abheben. Die Zapfen 71 ragen durch Schlitze 72 in einer Abdeckung 73, die an dem Wiegevorgang unbeteiligt ist. Dies hat den Vorteil, daß eine versehentliche Berührung mit dem Fuß keinen Einfluß auf das Wiegen hat.

Zum Waageninneren hin ist jeder Zapfen 71 zu einer Welle 74 ausgeformt, die in einem U-förmigen Bügel 75 gelagert ist. Der Bügel 75 ist mit seinem der Welle 74 fernen Ende um eine Achse 76 schwenkbar auf der Oberseite 77 des Oberteils 70 gelagert. Auf der Welle 74 ist eine Rolle 78 drehbar, die auf einer Rampe 79 abrollt. Die Rampen jeweils einer Waagenseite sind an einem Schieber 80 ausgebildet, der auf der Oberseite 77 in Richtung des Pfeils 81 verschieblich gelagert ist. Auf dem dem U-Mittelabschnitt 82 der Waage nahen Ende des Schiebers 80 ist eine Zahnstange 83 angebracht, die mit dem Ritzel 84 eines Verstellantriebs kämmt. Letzterer ist ein Elektromotor 86, dem ein Untersetzungsgetriebe 85 nachgeordnet ist.

Wird ein Einkaufswagen in den Zwischenraum zwischen den U-Schenkeln der Waage geschoben, so wird er in seiner Endposition von einem Rasthaken 55 gefangen. Dabei betätigt der Wagen mit seinem vorderen Stoßbügel einen Schalter 87, wodurch der Motor 86 in Richtung des Anhebens der Zapfen 71 betätigt wird. Der Schieber 80 wird nach links bewegt, wodurch die Rollen 78 an den Rampen 79 hinaufgleiten. Dadurch werden die Zapfen 71 angehoben. Sie untergreifen dabei das Fahrgestell des Einkaufswagens und heben diesen vom Boden ab. Die vorbeschriebene Anordnung ist auch an einer Waage nach Fig. 2 verwendbar.

## Patentansprüche

1. Wiegeeinrichtung für die Warenerfassung in Kaufhäusern, bei der jeder gekaufte Artikel identifiziert, anschließend zur Gewichtserfassung mit einer Bodenwaage gewogen und dann ggfs. von einem Tragbehälter aufgenommen wird, dadurch **gekennzeichnet,** daß die Bodenwaage (2) mit einer etwa bis in Griffhöhe ragenden Stütze (6, 24) verbunden ist, die nahe ihrem oberen Ende mit einer Aufhängevorrichtung (8) für mindestens einen von ihr abnehmbaren Tragbehälter (11) versehen ist.

2. Einrichtung nach Anspruch 1, dadurch **gekennzeichnet**, daß die Waagenaufnahme (1) ein das Innere eines Standbehälters (3) bis auf einen eine Wiegebewegung ermöglichenden Abstand ausfüllender Aufnahmebehälter ist, an dessen Wand (6) die Aufhängevorrichtung (8) angebracht ist.

3. Einrichtung nach Anspruch 1, dadurch **gekennzeichnet**, daß die Waagenaufnahme ein in das Innere des Standbehälters (3) und auf die Bodenwaage (23) einschiebbarer Einkaufsbehälter (21) ist, über dem die Aufhängevorrichtung (8) angeordnet ist.

4. Einrichtung nach einem der vorhergehenden Ansprüche, dadurch **gekennzeichnet**, daß die Aufhängevorrichtung (8) mindestens einen freitragend angeordneten Holm (10) hat, an dem der als Tragtasche (11) ausgebildete Tragbehälter hängt.

5. Einrichtung nach Anspruch 4, dadurch **gekennzeichnet**, daß die Aufhängevorrichtung (8) ein Tragtaschenpaket aus mehreren, an Sollbruchstellen (40) miteinander verbundenen Tragtaschen (11, 11′) trägt.

6. Einrichtung nach Anspruch 5, dadurch gekennzeichnet, daß die Aufhängevorrichtung (8) zwei Holme (10) hat, an denen die Tragtaschen (11, 11′) mit ihren Traggriffen (36) hängen, und daß die Tragtaschen (11, 11′) untereinander Über an ihre Taschenseiten (32, 33) angeformte, die Sollbruchstellen bildende Stege (40) aus dem Taschenmaterial verbunden sind.

7. Einrichtung nach einem der Ansprüche 3 bis 6, dadurch gekennzeichnet, daß die Bodenwaage (23) eine mittig auf dem Boden (22) des Standbehälters (3) angeordnete Einheit mit einer sie überdeckenden haubenförmigen Tragplatte (26) für einen Einkaufswagen (21) ist, dessen Räder beiderseits der Bodenwaage (23) auf die Tragplatte (26) aufschiebbar sind.

8. Einrichtung nach einem der Ansprüche 3 bis 6, dadurch gekennzeichnet, daß die Bodenwaage (50) in der Draufsicht Ü-förmig ist und zwischen den U-Schenkeln eine Tragvorrichtung (52) für den Einkaufsbehälter hat.

9. Einrichtung nach Anspruch 8, dadurch gekennzeichnet, daß die als Tragplatte (52) ausgebildete Tragvorrichtung um eine die U-Schenkel verbindende Linie (54) schwenkbar montiert ist.

10. Einrichtung nach einem der Ansprüche 7 bis 9, gekennzeichnet durch eine den Einkaufsbehälter (21) in Wiegestellung haltende Rastvorrichtung (55), die vorzugsweise elektromagnetisch entriegelbar ist.

11. Einrichtung nach einem der Ansprüche 8 bis 10, dadurch gekennzeichnet, daß die Tragplatte (62) mit dem beweglichen Waagenoberteil (64) verbunden ist und im Ruhezustand der Bodenwaage (60) auf deren Aufstandsfläche liegt, und daß ein Hebemechanismus zum Anheben der Tragplatte (62) und des Waagenoberteils (64) in eine Wiegestellung vorgesehen ist.

12. Einrichtung nach einem der Ansprüche 8 bis 10, dadurch gekennzeichnet, das die Tragvorrichtung an dem Waagenober- teil (70) angebrachte Tragzapfen (71) hat, und daß ein Hebemechanismus zum Anheben der Tragzapfen (71) und des Waagenoberteils (70) in eine Wiegestellung vorgesehen ist.

13. Einrichtung nach einem der Ansprüche 10 bis 12, dadurch gekennzeichnet, daß der Rastvorrichtung (55) ein Schalter (87) zugeordnet ist, der durch einen in den Standbehälter eingesetzten Einkaufsbehälter betätigt wird und einen Elektromotor (86) als Antrieb für den Hebemechanismus einschaltet.

## Claims

1. Weighing device for the registration of goods in department stores, in which each purchased article is identified, subsequently weighed for weight-registration purposes by a floor balance and then taken up, where appropriate, by a carrying container, characterized in that the floor balance (2) is connected to a support (6, 24) which projects approximately to grab level and which, close to its upper end, is provided with a suspension device (8) for at least one carrying container (11) which is removable from it.

2. Device according to Claim 1, characterized in that the weighing receptacle (1) is a receiving container filling the interior of a standing container (3) up to a clearance allowing a weighing movement, the suspension device (8) being fitted to the wall (6) of said receiving container.

3. Device according to Claim 1, characterized in that the weighing receptacle is a shopping container (21) which can be pushed into the interior of the standing container (3) and onto the floor balance (23), above which shopping container the suspension device (8) is disposed.

4. Device according to one of the preceding claims, characterized in that the suspension device (8) has at least one cantilever bar (10) from which the carrying container configured as a carrier bag (11) hangs.

5. Device according to Claim 4, characterized in that the suspension device (8) supports a carrier bag pack comprising a plurality of carrier bags (11, 11′) connected to one another at predetermined breaking points (40).

6. Device according to Claim 5, characterized in that the suspension device (8) has two bars (10), from which the carrier bags (11, 11′) hang by their carrying handles (36), and in that the carrier bags (11, 11′) are connected to one another via webs (40) made from the bag material which are formed onto their bag sides (32, 33) and form the predetermined breaking points.

7. Device according to one of Claims 3 to 6, characterized in that the floor balance (23) is a unit disposed centrally on the base (22) of the standing container (3), exhibiting a hood-shaped bearing plate (26), covering it, for a shopping trolley (21), the wheels of which can be pushed on both sides of the floor balance (23) onto the bearing plate (26).

8. Device according to one of Claims 3 to 6, characterized in that the floor balance (50) is U-shaped in top view and has, between the U-legs, a bearing device (52) for the shopping container.

9. Device according to Claim 8, characterized in that the bearing device configured as a bearing plate (52) is mounted pivotably about a line (54) connecting the U-legs.

10. Device according to one of Claims 7 to 9, characterized by a latch device (55) holding the shopping container (21) in the weighing position, which latch device can preferably be released electromagnetically.

11. Device according to one of Claims 8 to 10, characterized in that the bearing plate (62) is connected to the movable balance top part (64) and lies, in the rest state of the floor balance (60), on the latter's stand-on surface, and in that a lifting mechanism for raising the bearing plate (62) and the balance top part (64) into a weighing position is provided.

12. Device according to one of Claims 8 to 10, characterized in that the bearing device has bearing journals (71) fitted to the balance top part (70), and in that a lifting mechanism for raising the bearing journals (71)and the balance top part (70) into a weighing position is provided.

13. Device according to one of Claims 10 to 12, characterized in that a switch (87) is assigned to the latch device (55), which switch is actuated by a shopping container inserted into the standing container and switches on an electric motor (86) as the drive for the lifting mechanism.

## Revendications

1. Dispositif de pesage de marchandises dans des grands magasins, dans lequel chaque article acheté est identifié, pesé ensuite avec une bascule stationnaire pour la détermination du poids, puis, le cas échéant, pris en charge par un élément de réception portatif, caractérisé en ce que la bascule stationnaire (2) est reliée à un appui (6, 24) qui fait saillie environ jusqu'à hauteur de prise et qui est muni, à proximité de son extrémité supérieure, d'un dispositif de suspension (8) pour au moins un élément de réception portatif (11) qui peut en être retiré.

2. Dispositif selon la revendication 1, caractérisé en ce que le réceptacle de la bascule (1) est un récipient récepteur remplissant l'intérieur d'un récipient fixe (3) à l'exception d'une distance permettant un mouvement de pesée, le dispositif de suspension (8) étant monté sur la paroi (6) de ce récipient récepteur.

3. Dispositif selon la revendication 1, caractérisé en ce que le réceptacle de la bascule est un récipient porteur d'achats (21) qui peut être introduit à l'intérieur du récipient fixe (3) et sur la bascule stationnaire (23), et au-dessus duquel est disposé le dispositif de suspension (8).

4. Dispositif selon l'une des revendications précédentes, caractérisé en ce que le dispositif de suspension (8) a au moins une tige en porte-à-faux (10) à laquelle est suspendu l'élément de réception portatif sous la forme d'un sac (11).

5. Dispositif selon la revendication 4, caractérisé en ce que le dispositif de suspension (8) porte un paquet de sacs consistant en plusieurs sacs (11, 11′) reliés les uns aux autres par des points destinés à la rupture (40).

6. Dispositif selon la revendication 5, caractérisé en ce que le dispositif de suspension (8) comprend deux tiges en porte-à-faux (10) auxquelles les sacs (11, 11′) sont suspendus par leurs anses de transport (36), et en ce que les sacs (11, 11′) sont reliés entre eux par l'intermédiaire de languettes (40) constituant les points destinés à la rupture et formées sur leurs côtés (32, 33) à partir de la matière du sac.

7. Dispositif selon l'une des revendications 3 à 6, caractérisé en ce que la bascule stationnaire (23) est une unité disposée au centre sur le fond (22) du récipient fixe (3) avec un plateau d'appui (26), en forme de capot et la recouvrant, pour un chariot d'achats (21), dont les roues peuvent glisser de part et d'autre de la bascule stationnaire (23) sur le plateau d'appui (26).

8. Dispositif selon l'une des revendications 3 à 6, caractérisé en ce que la bascule stationnaire (50) a, en vue de dessus, une forme en U et en ce qu'un dispositif de support (52) est prévu pour le récipient porteur d'achats entre les branches du U.

9. Dispositif selon la revendication 8, caractérisé en ce qu'un dispositif de support, conçu en tant que plateau support (52), est monté pivotant autour d'une ligne (54) reliant les branches du U.

10. Dispositif selon l'une des revendications 7 à 9, caractérisé par un dispositif d'encliquetage (55) maintenant le récipient porteur d'achats (21) en position de pesage et, de préférence, à déverrouillage électro-magnétique.

11. Dispositif selon l'une des revendications 8 à 10, caractérisé en ce que le plateau support (62) est reliée à la partie supérieure mobile (64) de la bascule et repose, lorsque la bascule stationnaire (60) est au repos, sur la surface d'assise de celle-ci, et en ce qu'un mécanisme de levage est prévu pour soulever le plateau support (62) et la partie supérieure de la bascule (64) et l'amener à une position de pesage.

12. Dispositif selon l'une des revendications 8 à 10, caractérisé en ce que le dispositif de support a des tourillons porteurs (71) appliqués sur la partie supérieure (70) de la bascule et en ce qu'un mécanisme de levage est prévu pour soulever les tourillons porteurs (71) et la partie supérieure de la balance (70) et les amener à une position de pesage.

13. Dispositif selon l'une des revendications 10 à 12, caractérisé en ce qu'au dispositif d'encliquetage (55) est associé un interrupteur (87) qui est actionné par un récipient porteur d'achats introduit dans le récipient fixe et qui met en route un moteur électrique (86) servant à entraîner le mécanisme de levage.
